# DEMANDE DE BREVET EUROPEEN

(11) **EP 1 715 642 A2**
(43) Date de publication de la demande: **25.10.2006**
(21) Numéro de dépôt: 06112718.9
(22) Date de dépôt: 18.04.2006
(51) Int. Cl.: H04L 12/58, H04M 1/00

(54) **Procédé et système d'activation ou de désactivation automatique d'un service**

(30) Priorité: 19.04.2005 FR 0503880
(71) Demandeur: FRANCE TELECOM, 75015 Paris (FR)
(72) Inventeur: Bidet, Jérôme, 14210, EVRECY (FR); Anselme, Julien, 14120, MONDEVILLE (FR); Maschio-Esposito, Eric, 14790, FONTAINE ETOUPEFOUR (FR)
(74) Mandataire: Desormiere, Pierre-Louis

(57) **Abrégé**

Procédé d'activation et de désactivation automatique d'un service comprenant les étapes suivantes:
a) établissement, à partir d'un premier terminal (3), d'un champ de détection radio courte distance (310) pour détecter la présence d'un deuxième terminal (2),
b) désactivation du service lorsque le deuxième terminal (2) est dans le champ de détection radio courte distance (310), ou
c) activation du service lorsque le deuxième terminal est en dehors du champ de détection radio courte distance (310).

## Description

**Domaine de l'invention et art antérieur** La présente invention concerne les services liés aux transferts ou renvois de messages électroniques et/ou d'appels téléphoniques et, plus particulièrement, ceux permettant de recevoir des messages électroniques (e-mails) ou des appels téléphoniques sur plusieurs terminaux notamment mobiles.

Dans le cas des messages électroniques, il existe aujourd'hui différents types de services ou systèmes de transfert de messages qui permettent de recevoir des messages électroniques (e-mails) arrivant sur la boîte aux lettres d'un utilisateur à la fois sur son ordinateur (PC) et sur un terminal mobile de son choix sous réserve qu'il soit compatible avec de tels services (ex. Assistant personnel numérique (PDA) communicant, SmartPhone, etc.). Ces services permettent à l'utilisateur d'accéder à sa messagerie alors qu'il est en situation de nomadisme. Des services dits de type "push-mail", dans lesquels l'activation du transfert de messages est initiée et effectuée à partir du serveur de messagerie, sont notamment proposés par la société Research In Motion (RIM), via son service Blackberry™, ou par la société Good Technologies™. Des services, dits de type "synchronisation de messagerie mobile", dans lesquels l'activation du transfert de messages est initiée à partir d'un des terminaux par envoi de requêtes de synchronisation vers un serveur de transfert de message, sont notamment proposés par la société Orange™, via son service Orange Bureau™, ainsi que par la société Microsoft™, via son service ActiveSync™.

Ces services de transfert de message ("push mail" ou "synchronisation de messagerie mobile") proposent généralement des fonctions à l'utilisateur pour lui permettre d'activer/désactiver le service lorsqu'il le souhaite.

Cependant, la gestion active du service (désactivation/réactivation du service de transfert de message est relativement complexe pour l'utilisateur. En effet, il n'y a rien de prévu au niveau des logiciels de messagerie. L'utilisateur doit, au travers d'une application spécifique installée sur son terminal mobile, contacter le serveur de transfert de message pour activer ou désactiver le service. Enfin, si cette fonction n'existe pas, il doit alors contacter l'administrateur du service pour lui demander de le faire à sa place, par exemple en lui envoyant un e-mail, ce qui entraîne une latence dans la prise en compte des changements d'états.

Dans le cas des transferts d'appels téléphoniques, les techniques actuelles mises en oeuvre sur des centraux téléphoniques de type PABX ("Private Automatic Branch eXchange") ou IPBX ("IP-based Private Branch eXchange"), consistent, à chaque fois qu'un utilisateur doit s'absenter de son bureau, à entrer une séquence de code DTMF ("Dual Tone Multi Frequency") (exemple: *99 + numéro du téléphone) au clavier du téléphone. Une fois la séquence entrée, le service de redirection d'appel est activé vers le numéro de téléphone de son choix, le plus souvent un téléphone mobile. Dans ce cas, selon les paramètres de la règle activée, tout ou partie des nouveaux appels entrants seront redirigés vers le téléphone mobile. A son retour dans le bureau, l'utilisateur devra composer une nouvelle séquence (exemple: *991) qui aura pour effet d'annuler ce renvoi conditionnel.

Les services connus de transfert automatique de poste téléphonique comprennent toujours une séquence plus ou moins longue de codes DTMF (Dual-tone-multi-frequency) que l'utilisateur doit renseigner pour activer. Cette activation/désactivation des transferts de poste reste à effectuer manuellement par l'utilisateur. Or, les systèmes PABX ou IPBX actuels, même avec des fonctionnalités avancées comme les CTI (Couplage Téléphonie Informatique), sont dans l'incapacité d'automatiser la mise en service du système, c'est-à-dire permettre l'activation/désactivation des règles de transfert programmées en fonction de la présence ou non de l'utilisateur dans la pièce.

Par conséquent, que ce soit pour le service de transfert des messages électroniques ou d'appels téléphoniques, il n'existe pas de solutions d'automatisation pour l'activation/désactivation du service. De ce fait, la gestion et l'optimisation de l'utilisation du service, en fonction des situations d'usage et notamment de l'accès aux terminaux disponibles, reste à la charge de l'utilisateur.

### Objet et description succincte de l'invention

La présente invention vise à remédier aux inconvénients précités et à proposer une solution qui permet l'activation et la désactivation automatique d'un service de transfert de messages électroniques ou d'appels téléphoniques vers un terminal mobile sans intervention de l'utilisateur, et ce en fonction de sa proximité avec son poste fixe.

Ces buts sont atteints grâce à procédé d'activation et de désactivation automatique d'un service, caractérisé en ce qu'il comprend les étapes suivantes:
a) établissement, à partir d'un premier terminal, d'un champ de détection radio courte distance pour détecter la présence d'un deuxième terminal,
b) désactivation dudit service lorsque le deuxième terminal est dans le champ de détection radio courte distance, et
c) activation dudit service lorsque le deuxième terminal est en dehors du champ de détection radio courte distance.

Ainsi, grâce au procédé de l'invention, lorsque l'utilisateur équipé de son deuxième terminal, en général mobile, se trouve à proximité de son premier terminal (poste fixe), le service de transfert de messages ou d'appels téléphoniques vers le deuxième terminal est automatiquement suspendu. Par conséquent, le service de transfert est interrompu pendant toute la durée où l'utilisateur a accès à son poste fixe à partir duquel il peut gérer ses messages électroniques par son logiciel de messagerie habituel ou recevoir ses appels sur un poste téléphonique fixe. De cette façon, dans le cas des messages électroniques, on évite de transférer sur son terminal mobile des messages électroniques qu'il consulte déjà sur son poste fixe, ce qui permet d'économiser la capacité de stockage de messages du terminal mobile ainsi que la bande passante dans le réseau de communications mobile.

En outre, conformément à l'invention, lorsque le terminal mobile de l'utilisateur n'est plus détecté à proximité du poste fixe, ce qui correspond à une situation où l'utilisateur n'a plus accès son poste fixe (i.e. situation de nomadisme), le service de transfert est activé automatiquement pour que celui-ci continue à recevoir ses messages électroniques ou ses appels téléphoniques sur son terminal mobile.

Le service peut être un service de transfert de messages électroniques destiné à permettre à un utilisateur de recevoir sur le deuxième terminal les messages électroniques envoyés vers un serveur de messagerie et destinés à être transmis au premier terminal, les premier et deuxième terminaux comprenant chacun un logiciel de messagerie pour accéder audit serveur de messagerie.

Dans le cas d'un service de transfert de message de type "push-mail", dans l'étape b), l'application de surveillance envoie à un ensemble comprenant le serveur de messagerie et un serveur de transfert de messages, directement ou au travers d'un module d'application associé audit ensemble, une information de présence du deuxième terminal de manière à désactiver le service de transfert de messages électroniques vers ledit deuxième terminal et, dans l'étape c), l'application de surveillance envoie audit ensemble, directement ou au travers d'un module d'application associé audit ensemble, une information d'absence du deuxième terminal de manière à activer le service de transfert de messages électroniques vers ledit deuxième terminal.

Dans le cas d'un service de transfert de message de type "synchronisation de messagerie mobile", dans l'étape b), l'application de surveillance, embarquée sur le deuxième terminal, inhibe l'envoi de requêtes de synchronisation depuis le deuxième terminal vers le serveur de messagerie de manière à désactiver le service de transfert de messages électroniques vers ledit deuxième terminal et, dans l'étape c), l'application de surveillance autorise l'envoi de requêtes de synchronisation depuis le deuxième terminal vers le serveur de messagerie de manière à activer le service de transfert de messages électroniques vers ledit deuxième terminal.

Selon un aspect particulier de l'invention, dans l'étape c), seuls les messages qui n'ont pas été traités (supprimés ou déplacés en dehors de la boîte de réception de l'utilisateur) durant sa session de travail sont transférés vers le deuxième terminal. Ainsi, les messages traités par l'utilisateur sur son poste fixe ne sont pas transférés sur le terminal mobile, ce qui assure une continuité dans la gestion des messages pour l'utilisateur en lui évitant de répéter les traitements déjà effectués sur son poste fixe.

Dans le cas d'un service de transfert d'appel téléphonique destiné à permettre à un utilisateur de recevoir sur le deuxième terminal les communications téléphoniques émises à destination d'un poste téléphonique, dans l'étape b), l'application de surveillance envoie à un serveur une information de présence du deuxième terminal de manière à désactiver le service de transfert d'appel téléphonique vers ledit deuxième terminal et, dans l'étape c), l'application de surveillance envoie à un serveur CTI, une information d'absence du deuxième terminal de manière à activer le service de transfert d'appel téléphonique vers ledit deuxième terminal.

La présente invention concerne également un terminal comprenant des moyens d'établissement de liaison avec un serveur de messagerie ou avec un serveur CTI, caractérisé en ce qu'il comprend des moyens de détection radio courte distance pour détecter la présence d'un deuxième terminal dans un champ de détection radio courte distance, des moyens pour désactiver un service lorsque le deuxième terminal est dans le champ radio courte distance et des moyens pour activer ledit service lorsque le deuxième terminal est en dehors du champ de détection radio courte distance.

Conformément à l'invention et comme décrit précédemment, le terminal de l'invention permet de réaliser l'activation et la désactivation automatique du service de transfert de façon totalement transparente pour l'utilisateur en fonction de la présence ou de l'absence du terminal mobile dans le champ de détection.

Dans le cas d'un service de transfert de message de type "push-mail", le terminal (en général un terminal fixe) comprend des moyens pour envoyer à un ensemble, comprenant le serveur de messagerie et un serveur de transfert de message, une information de présence d'un deuxième terminal (en général mobile) de manière à désactiver le service de transfert de messages électroniques vers le deuxième terminal et des moyens pour envoyer audit ensemble une information d'absence du deuxième terminal de manière à activer le service de transfert de messages électroniques vers le deuxième terminal.

Dans le cas d'un service de transfert d'appel téléphonique, le terminal (en général un terminal fixe) comprend des moyens pour envoyer à un serveur une information de présence du deuxième terminal (en général mobile) de manière à désactiver le service de transfert d'appel téléphonique vers ledit deuxième terminal et des moyens pour envoyer à un serveur une information d'absence du deuxième terminal de manière à activer le service de transfert d'appel téléphonique vers ledit deuxième terminal.

Dans le cas d'un service de transfert de message de type "synchronisation de messagerie mobile", le terminal (ici un terminal mobile) comprend des moyens pour inhiber l'envoi de requêtes de synchronisation depuis ledit terminal vers le serveur de messagerie de manière à désactiver le service de transfert de messages électroniques vers ledit terminal et des moyens pour autoriser l'envoi de requêtes de synchronisation depuis ledit terminal vers le serveur de messagerie de manière à activer le service de transfert de messages électroniques vers ledit terminal.

L'invention concerne encore un programme d'ordinateur ou application de surveillance pouvant être mis en oeuvre par le terminal décrit ci-dessus. Dans le cas d'un service de transfert de message de type "push-mail", le programme comporte des instructions pour envoyer au serveur de messagerie une information de présence du deuxième terminal pour désactiver le service de transfert de messages électroniques vers ledit deuxième terminal lorsque celui-ci est détecté par ledit terminal ou une information d'absence du deuxième terminal pour activer le service de transfert de messages électroniques vers ledit deuxième terminal.

Dans le cas d'un service de transfert d'appel téléphonique, le programme comporte des instructions pour envoyer à un serveur une information de présence du deuxième terminal de manière à désactiver le service de transfert d'appel téléphonique vers ledit deuxième terminal ou une information d'absence du deuxième terminal de manière à activer le service de transfert d'appel téléphonique vers ledit deuxième terminal.

Dans le cas d'un service de transfert de message de type "synchronisation de messagerie mobile", le programme comporte des instructions pour inhiber l'envoi de requêtes de synchronisation depuis ledit terminal vers le serveur de messagerie de manière à désactiver le service de transfert de messages électroniques vers ledit terminal et pour autoriser l'envoi de requêtes de synchronisation depuis ledit terminal vers le serveur de messagerie de manière à activer le service de transfert de messages électroniques vers ledit terminal.

Ce programme peut être stocké sur un support d'enregistrement.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un système conformément à un premier mode de réalisation de l'invention,
- la figure 2 est un organigramme illustrant les étapes d'un procédé mis en oeuvre avec le système de la figure 1,
- la figure 3 est une vue schématique globale d'un système conformément à un deuxième mode de réalisation de l'invention,
- la figure 4 est un organigramme illustrant les étapes d'un procédé mis en oeuvre avec le système de la figure 3,
- la figure 5 est une vue schématique globale d'un système conformément à un troisième mode de réalisation de l'invention,
- la figure 6 est un organigramme illustrant les étapes d'un procédé mis en oeuvre avec le système de la figure 5.

### Description détaillée des modes de réalisation de l'invention

L'invention est destinée à permettre l'automatisation de l'activation/désactivation des services de transfert de messages électroniques ou d'appel téléphoniques en fonction de la proximité du terminal mobile de l'utilisateur par rapport à son poste de travail fixe. A cet effet, l'invention propose une solution qui permet d'associer à ce type de service l'utilisation d'une technologie de communication radio courte distance telle que la technologie Bluetooth™ ou équivalent. Plus précisément, la technologie de communication radio courte distance Bluetooth™ ou équivalent est ici utilisée comme moyen de connexion et de détection de présence du terminal mobile. Bluetooth™ est une technologie radio courte distance permettant des connexions sans fil entre les appareils électroniques. Pour plus de détails techniques concernant la technologie Bluetooth™, on se reportera notamment aux sites suivants: http://www.bluetooth.com et http://standards.ieee.org.

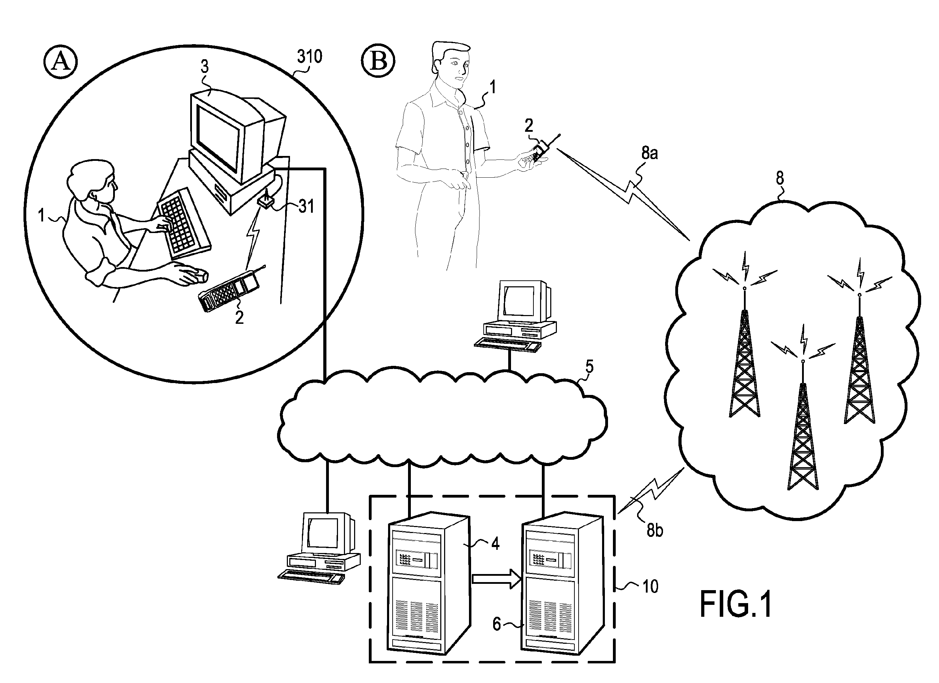

La figure 1 est une vue globale d'un système de l'invention conformément à un premier mode de réalisation de l'invention appliqué au service d'activation/désactivation automatique d'un service de type "push-mail". Les parties qui interviennent lors de la mise en oeuvre du procédé d'activation/désactivation automatique d'un service de type "push-mail" dans le système de la figure 1 sont un utilisateur 1, équipé d'un terminal mobile 2 comprenant des moyens de communication radio courte distance tels qu'un port Bluetooth™ (non représenté) ou équivalent et un poste de travail fixe comme par exemple un ordinateur 3 de type PC qui comprend également des moyens de communication radio courte distance tel qu'une borne Bluetooth™ 31 ou équivalent. Dans la présente invention, l'ordinateur 3 est en mode détection, c'est-à-dire qu'il scrute en permanence dans son champ de détection radio courte distance la présence d'un terminal mobile. Dans le cas, par exemple, de la technologie Bluetooth™, l'ordinateur 3 possède un champ de détection radio courte distance 310 qui s'étend sur un diamètre d'une dizaine de mètre, ce qui correspond à la surface moyenne d'un bureau et permet de s'assurer, lors de la détection, de la proximité du terminal mobile de l'utilisateur. A cet effet, l'ordinateur 3 comprend, conformément à l'invention, une application ou logiciel client de surveillance de l'activité radio courte distance (ici Bluetooth™) qui est en liaison avec la borne Bluetooth™ 31 et qui s'active automatiquement dès que le terminal mobile 2 est détecté par la borne comme décrit plus loin en détail.

La détection de la présence du terminal mobile 2 dans le champ de détection radio courte distance de l'ordinateur 3 se fait, de façon connue, selon les protocoles et principes définis par le type de liaison qui est utilisé (ex. Bluetooth™). Le principe général étant que la borne radio courte distance associée à l'ordinateur 3 est en position d'écoute (mode détection) d'un signal radio courte distance émis par le terminal mobile 2. Suivant la technologie Bluetooth™ par exemple, la borne 31 émet des requêtes de découvertes dans le champ de détection auxquelles va répondre le port Bluetooth™ du terminal mobile 2. De telles requêtes sont bien connues notamment lors de la négociation des paramètres de la communication courte distance entre deux appareils (ex. vitesse, sécurité, etc.) avant l'échange de données proprement dit. La borne Bluetooth™ 31 dialogue avec l'application de surveillance de l'ordinateur 3 pour l'informer de la détection d'un terminal mobile dans le champ 310. Une fois la connexion Bluetooth™ établie entre le terminal mobile 2 et la borne 31, l'application de surveillance peut échanger des informations avec le terminal mobile afin de l'authentifier.

Le système de la figure 1 comprend en outre un serveur de messagerie 4 auquel l'utilisateur a accès depuis son ordinateur 3 via un réseau 5, qui peut être ouvert comme le réseau Internet ou fermé tel qu'un réseau d'entreprise de type Intranet, afin de recevoir et envoyer des messages électroniques.

Afin d'assurer le service de type "push-mail" qui permet le transfert ou, plus précisément, la duplication des messages électroniques vers le terminal mobile 2, le système comprend un serveur de transfert de message 6 qui est en liaison avec le serveur de messagerie 4 via le réseau 5 pour récupérer les messages reçus sur ce dernier. Le serveur de transfert de message 6 a également accès à un réseau de téléphonie mobile 8, via une liaison 8b, pour transférer les messages reçus par le serveur de messagerie 4 sur le terminal mobile 2 en liaison 8a avec le réseau 8 suivant le principe du service de transfert de message de type "push-mail" décrit précédemment.

Le serveur de messagerie 4 et le serveur de transfert de message 6 forment un ensemble 10 dans lequel le service de transfert de message de type "push-mail" est implémenté. La gestion du service de transfert de message de type "push-mail" (i.e. activation/désactivation du service) dans l'ensemble 10 peut être réalisée principalement de deux façons différentes en fonction de la nature des interactions entre les deux serveurs.

Selon une première configuration, le serveur de transfert de message dispose d'un module d'extension (ex. élément logiciel apportant des fonctionalités supplémentaires ou "plugin") installé directement sur le serveur de messagerie et c'est ce module d'extension qui analyse les modifications de la boîte de réception et génère la copie des messages de la boîte de réception vers le serveur de transfert de message. Lors de la synchronisation vers le terminal mobile, les nouveaux messages contenus ou les changements d'états des messages de la boîte de réception sont poussés depuis le serveur de transfert de message vers le terminal mobile. Dans cette configuration, la désactivation du service de transfert de message de type "push-mail" correspond à la suspension de la copie des messages de la boîte de réception vers le serveur de transfert de message.

Suivant une autre configuration interne de l'ensemble 10, le serveur de transfert de message interroge à intervalle régulier le serveur de messagerie (comme un client de messagerie) en se substituant à l'utilisateur (avec des droits privilégiés). Le serveur de transfert de message analyse alors les modifications (ex. nouveaux messages, messages modifiés, etc.) apportées à la boîte de réception qui sont poussées vers le terminal mobile. Dans cette configuration, la désactivation du service de transfert de message de type "push-mail" correspond à la suspension de l'interrogation du serveur de messagerie par le serveur de transfert de message.

Dans la suite de la description on considèrera l'ensemble 10 comme présentant la première configuration décrite précédemment.

L'activation ou la désactivation du service de transfert de message de type "push-mail" est réalisée en fonction du mode "itinérant" ou "non itinérant" du profil client de messagerie de l'utilisateur 1 qui est géré par l'outil d'administration du serveur de messagerie 4. Lorsque le client de messagerie de l'utilisateur 1 présente un profil en mode "itinérant", le serveur de messagerie 4 duplique les messages qu'il reçoit et les transfère au serveur de transfert de message 6 pour qu'ils soient aussi transmis au terminal mobile 2. Au contraire, lorsque le client de messagerie de l'utilisateur 1 présente un profil en mode "non itinérant", le service de transfert de message de type "push-mail" est désactivé, la transmission des messages vers le terminal mobile 2 est arrêtée au niveau du serveur de messagerie 4 qui ne duplique plus les messages au serveur de transfert de message 6.

Par ailleurs, l'ordinateur 3 est équipé d'un logiciel ou client de messagerie électronique bien connu en soi et qui comprend notamment une boîte de réception qui permet à l'utilisateur de recevoir et de consulter les messages électroniques (e-mail). En outre, de façon connue, le logiciel de messagerie (ou agent utilisateur) est un logiciel qui permet à un utilisateur d'accéder, par un identifiant propre, au service de messagerie du serveur de messagerie 4.

Conformément à la présente invention, l'activation et la désactivation du service de transfert de message de type "push-mail" sont gérées automatiquement par l'application de surveillance à la différence de la technique antérieure dans laquelle l'activation et la désactivation du service de transfert de message de type "push-mail" sont réalisées par l'utilisateur à partir du logiciel de messagerie installé sur son terminal. A chaque évènement, c'est-à-dire en cas de détection ou de perte/absence de connexion avec le terminal mobile, l'application de surveillance informe, via le réseau 5, le serveur de messagerie 4 de la situation de l'utilisateur. Plus précisément, lorsque le terminal mobile de l'utilisateur est détecté à proximité de l'ordinateur, l'application déclare au serveur de messagerie 4 que celui-ci est en mode "non itinérant". A l'inverse, lorsque la connexion Bluetooth™ avec le terminal s'interrompt ou en l'absence d'une telle connexion (ex. au démarrage de l'ordinateur), l'application de surveillance déclare au serveur de messagerie que l'utilisateur est en mode "itinérant". En fonction du mode "itinérant" ou "non itinérant" déclaré au serveur de messagerie 4, l'outil d'administration de celui-ci va modifier le profil du client suivant le mode déclaré et activer ou désactiver le service de transfert de message de type "push-mail" en conséquence.

Selon le mode d'implémentation de l'application de surveillance de l'ordinateur 3, celle-ci peut soit modifier directement le profil de l'utilisateur dans le serveur de messagerie, soit pour des aspects liés à la sécurité d'accès aux serveurs d'applications, envoyer l'information à un module d'extension d'application sur le serveur de messagerie qui se chargera de cette mise à jour du profil (mode itinérant/non itinérant). La mise en oeuvre de la présente invention ne nécessite pas de changement au niveau du serveur de transfert de message car on utilise la même fonction que celle utilisée lors d'une mise en oeuvre manuelle des services d'activation ou de désactivation du service de transfert de message de type "push-mail".

Le terminal mobile 2 est également équipé d'un logiciel ou client de messagerie électronique pour consulter les messages électroniques reçus sur le serveur de messagerie 4 via le serveur de transfert de message 6.

L'automatisation de l'activation/désactivation d'un service de type "push-mail" selon l'invention se déroule suivant deux situations représentées en figure 1. La première situation A correspond à la présence de l'utilisateur 1 et de son terminal mobile 2 dans le champ de détection Bluetooth™ 310 de l'ordinateur 3. Dans cette situation, l'ordinateur 3 peut entrer en connexion avec le terminal mobile 2 via une liaison Bluetooth™ établie entre la borne Bluetooth™ 31 de l'ordinateur 3 et le port Bluetooth™ du terminal mobile 2. Dès que l'ordinateur 3 détecte la présence du terminal mobile 2, le service de transfert de message de type "push-mail" est automatiquement désactivé. Le transfert des messages électroniques vers le terminal mobile 2 est alors suspendu (i.e. pas de routage des messages électronique vers le terminal mobile par le serveur de messagerie), et ce pendant toute la durée où le terminal mobile 2 est détecté par la borne Bluetooth™ 31 de l'ordinateur 3 qui correspond à la situation (situation A) où l'utilisateur est censé être présent devant son ordinateur 3 et gérer ses messages électroniques directement sur celui-ci à l'aide du logiciel de messagerie habituel.

Lorsque le terminal mobile 2 quitte le champ de détection Bluetooth™ 310, l'utilisateur 1 se trouve dans la deuxième situation B illustrée sur la figure 1, c'est-à-dire une situation de nomadisme dans laquelle l'utilisateur 1 n'a plus accès à son ordinateur 3. Dès que le terminal mobile 2 quitte le champ de détection 310, la borne Bluetooth® 31 de l'ordinateur 3 perd le contact avec le port Bluetooth™ du terminal mobile. Le service de transfert de message de type "push-mail" est alors automatiquement activé. Il effectue la mise à jour de la boîte de réception avec le terminal mobile en fonction des données du serveur de messagerie 4.

Ainsi, seuls les messages qui n'ont pas été traités, c'est-à-dire supprimés ou déplacés en dehors de la boîte de réception de l'utilisateur, durant sa session de travail deviennent accessibles depuis le terminal mobile 2.

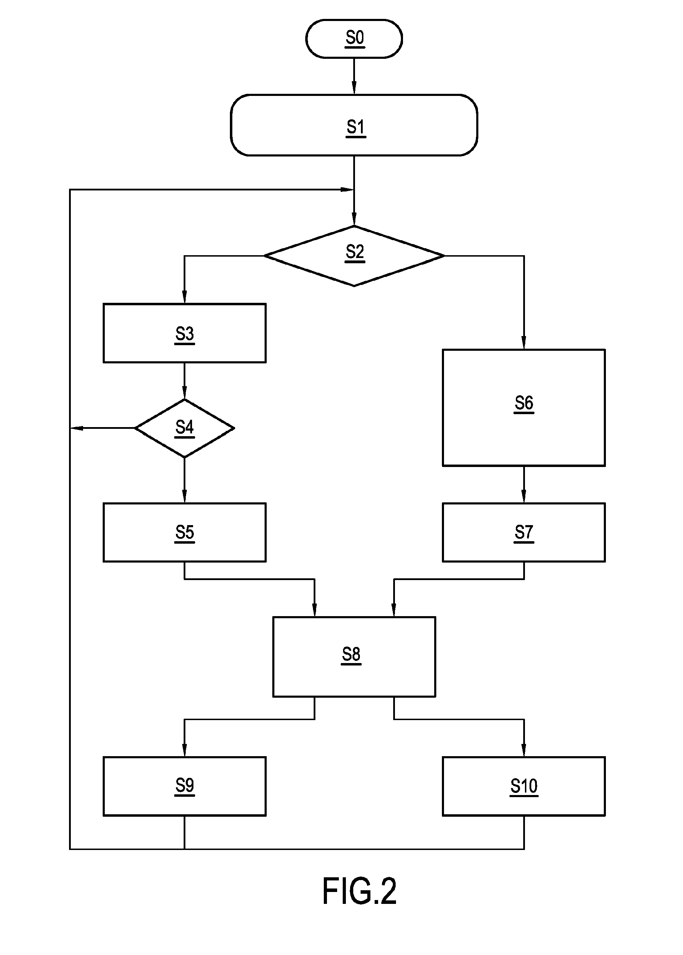

On décrit maintenant en relation avec la figure 2 un procédé d'activation/désactivation automatique du service de transfert de message de type "push-mail" conformément à un mode de réalisation de l'invention qui est mis en oeuvre dans le système de la figure 1.

Au démarrage de l'ordinateur 3 ("boot") (étape S0), une application ou logiciel de surveillance de l'activité Bluetooth™ pour le service de transfert de message de type "push-mail" est chargée en mémoire (étape S1). Dès qu'elle est chargée, cette application recherche en permanence, via un dialogue avec la borne Bluetooth™ 31, la présence du terminal mobile dans le champ de détection 310 (étape S2). A cet effet, on définit préalablement un partenariat entre le terminal mobile 2 et l'ordinateur 3 qui permet à l'application de reconnaître et d'authentifier le terminal mobile lorsque celui-ci est à portée de la borne 31.

A titre d'exemple un tel partenariat peut être défini lors de l'installation de la borne Bluetooth™ 31 sur l'ordinateur 3 dont le programme de configuration propose de détecter les appareils Bluetooth™ alors disponibles dans l'environnement. Après détection du terminal mobile de l'utilisateur, l'utilisateur sélectionne ce dernier, lui donne un nom et suit la procédure d'échange de mot de passe personnalisé entre l'ordinateur et le terminal mobile. Une fois ces actions réalisées, le partenariat est actif et à chaque nouvelle détection, le terminal sera reconnu et le partenariat réactivé automatiquement.

Lorsque la présence d'un terminal mobile est détectée par la borne Bluetooth™ 31 (étape S3), l'application de surveillance en est informée et vérifie si l'appareil détecté répond au partenariat préalablement défini pour déterminer s'il s'agit bien du terminal mobile 2 (étape S4). Si le terminal détecté n'est pas reconnu et authentifié comme le terminal mobile 2, l'application ne réagit pas et le service de transfert de message de type "push-mail" reste activé.

En revanche, si le terminal détecté correspond bien au terminal mobile 2, signifiant dans l'exemple de la figure 1 que l'utilisateur est entré dans son bureau où se trouve l'ordinateur 3 (situation A), l'application de surveillance informe, via le client de messagerie de l'ordinateur 3, le serveur de messagerie 4 que l'utilisateur est en mode "non itinérant". L'outil d'administration du serveur de messagerie 4 modifie alors le profil du client de messagerie et désactive le service de transfert de message de type "push-mail" (étape S5). A partir de ce moment, la transmission des messages vers le terminal mobile 2 est arrêtée.

Ainsi, lorsqu'un nouveau message arrive sur le serveur de messagerie (étape S8), ce nouveau message n'est pas transféré vers le terminal mobile 2 (étape S9). Cette procédure est répétée tant que le terminal mobile 2 est présent dans le champ de détection 310.

Lorsque le terminal mobile 2 quitte le champ de détection Bluetooth™ 310 (ex. perte de connexion lorsque l'utilisateur 1 du terminal mobile 2 quitte son bureau (situation B sur la figure 1)) (étape S6), l'application informe le serveur de messagerie 4 du changement d'état de l'utilisateur 1 qui redevient alors "nomade". L'outil d'administration du serveur de messagerie 4 modifie le profil du client de messagerie de l'utilisateur 1 en mode "itinérant" et active le service de transfert de message de type "push-mail" (étape S7). Les nouveaux messages électroniques reçus par l'utilisateur sur le serveur de messagerie 4 (étape S8) sont dupliqués et transférés au serveur de transfert de message 6 pour être aussi transmis au terminal mobile 2 (étape S10). Cette procédure (étapes S6 à S10) est également valable en l'absence de présence du terminal mobile 2 dans le champ de détection lors du démarrage de l'ordinateur 3.

Ainsi, l'automatisation du service de transfert de message de type "push-mail" conformément à la présente invention présente plusieurs avantages. En ce qui concerne le confort d'utilisation, elle évite les redondances de lecture et de traitements des messages électroniques entre le poste fixe et le terminal mobile. En matière d'ergonomie, elle assure une gestion automatique du service de transfert de message de type "push-mail" qui détache l'utilisateur du souci d'activer ou de désactiver le service. Enfin, en matière de ressources, la solution de l'invention permet d'optimiser les ressources réseau (ex. bande passante) et équipements (ex. capacité mémoire du terminal mobile) puisque les périodes d'activation du service de transfert de message de type "push-mail" sur le terminal mobile sont optimisées.

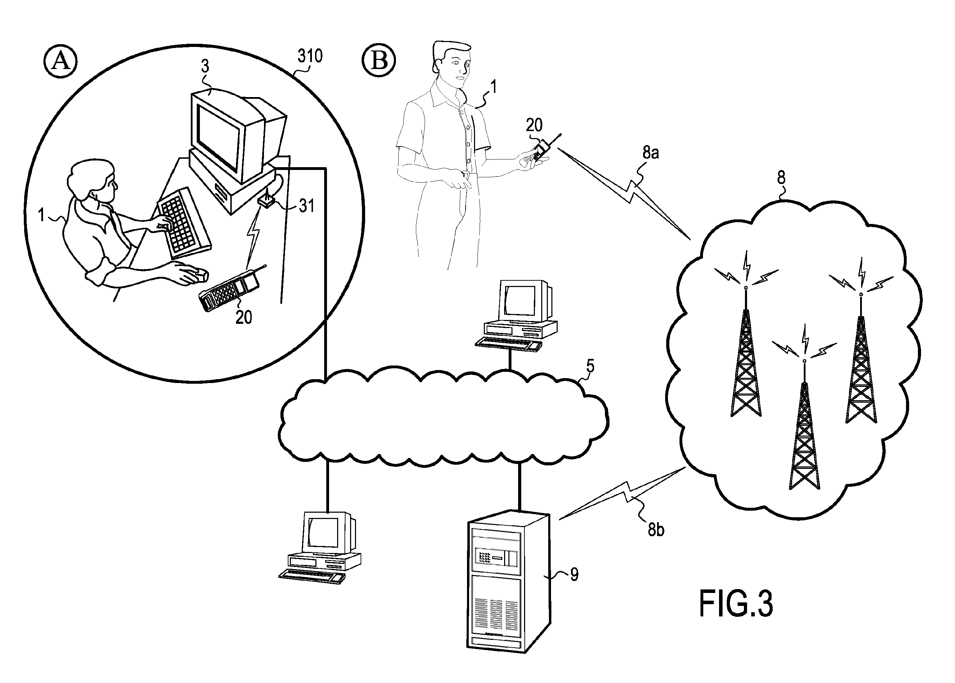

La figure 3 est une vue globale d'un système de l'invention conformément à un deuxième mode de réalisation de l'invention appliqué à l'activation/désactivation automatique d'un service de transfert de message de type "synchronisation de messagerie mobile". Le système de la figure 3 est identique à celui de la figure 1 à l'exception du serveur de messagerie 9 et des moyens logiciels embarqués dans le terminal mobile 20. Par souci de simplification, les éléments communs à ceux de la figure 1 ne seront pas décrits à nouveau.

Le serveur 9 est un serveur de messagerie qui intègre les fonctions de serveur de transfert de message pour un service de transfert de message de type "synchronisation de messagerie mobile ". Ce serveur est donc apte à recevoir des requêtes de la part du terminal mobile 20 et de synchroniser la boîte de réception de l'utilisateur avec le logiciel de messagerie du terminal mobile à travers le réseau de téléphonie mobile 8 et via les liaisons 8a et 8b.

Le terminal mobile 20 comprend une application de surveillance chargée d'inhiber/déclencher l'envoi de requêtes vers le serveur de messagerie supportant le service de synchronisation en fonction de la présence ou non du terminal mobile dans le champ de détection de l'ordinateur. A cet effet et de façon différente avec le système de la figure 1, l'application de surveillance chargée de détecter la présence ou non du terminal mobile dans le champ 310 est embarquée sur le terminal mobile 20 qui possède en outre une borne de détection radio courte distance telle qu'une borne Bluetooth™ (non représentée). En d'autres termes, c'est le terminal mobile 20 qui est en mode détection et qui scrute la présence de l'ordinateur 3 pour activer/désactiver l'envoi de requêtes de synchronisation vers le serveur de messagerie 9 suivant qu'il se trouve ou non dans le champ 310. Le champ 310 émis par la borne 31 de l'ordinateur 3 correspond ici à la "sphère" radio courte distance permettant de détecter la proximité de l'ordinateur 3. La proximité du terminal mobile 20 avec l'ordinateur 3 est détectée lorsque l'application de surveillance embarquée sur le terminal mobile peut établir un partenariat avec l'ordinateur 3, c'est-à-dire lorsque le terminal mobile 3 se trouve dans le champ 310.

Suivant la technologie Bluetooth™ par exemple, la borne du terminal mobile 20 émet des requêtes de découvertes dans son champ de détection auxquelles va répondre le port Bluetooth™ de l'ordinateur 3. De telles requêtes sont bien connues notamment lors de la négociation des paramètres de la communication courte distance entre deux appareils (ex. vitesse, sécurité, etc.) avant l'échange de données proprement dit. La borne Bluetooth™ du terminal mobile 20 dialogue avec l'application de surveillance pour l'informer de la détection de l'ordinateur 3. Une fois la connexion Bluetooth™ établie entre l'ordinateur 3 et la borne du terminal mobile, l'application de surveillance peut échanger des informations avec l'ordinateur 3 afin de l'authentifier.

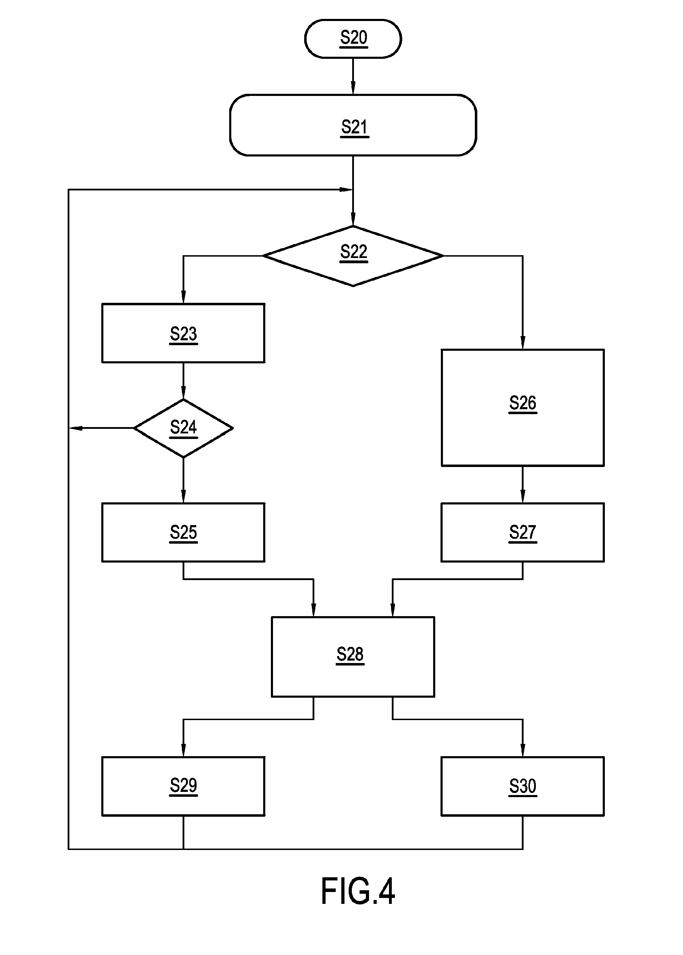

On décrit maintenant en relation avec la figure 4 un procédé d'activation/désactivation automatique du service de transfert de message de type "synchronisation de messagerie mobile" conformément au deuxième mode de réalisation de l'invention qui est mis en oeuvre dans le système de la figure 3.

Au démarrage du terminal mobile 20 ("boot") (étape S20), une application ou logiciel de surveillance de l'activité Bluetooth™ pour le service de transfert de message est chargée en mémoire dans le terminal mobile (étape S21). Dès qu'elle est chargée, cette application recherche en permanence, via un dialogue avec la borne Bluetooth™ du terminal mobile 20, la présence du champ 310 de l'ordinateur 3 (étape S22).

Lorsque la présence de l'ordinateur 3 est détectée par la borne Bluetooth™ du terminal mobile 20 (étape S23), l'application de surveillance en est informée et vérifie si l'appareil détecté répond au partenariat préalablement défini pour déterminer s'il s'agit bien de l'ordinateur 3 (étape S24). Si le terminal détecté n'est pas reconnu et authentifié comme l'ordinateur 3, l'application ne réagit pas et le serveur de transfert de message de type "push-mail" reste activé.

En revanche, si le terminal détecté correspond bien à l'ordinateur 3, signifiant dans l'exemple de la figure 3 que l'utilisateur est entré dans son bureau où se trouve l'ordinateur 3 (situation A), l'application de surveillance inhibe l'envoi des requêtes de synchronisation depuis le terminal mobile 20 vers le serveur de messagerie 9. Il est en effet inutile dans cette situation de dupliquer les messages à la fois sur le terminal mobile et sur l'ordinateur. L'application sur le terminal mobile maintien le profil de synchronisation de l'utilisateur mais inhibe cependant toute demande de synchronisation vers le serveur de messagerie 9 (étape S25). A partir de ce moment, les nouveaux messages arrivés sur la messagerie du serveur 9 (étape S28) ne sont pas synchronisés vers le terminal mobile 20 (étape S29).

Lorsque le terminal mobile 20 quitte le champ Bluetooth™ 310 (ex. perte de connexion lorsque l'utilisateur 1 du terminal mobile 20 quitte son bureau (situation B sur la figure 3)) (étape S26), l'application de surveillance autorise le terminal mobile à lancer de nouveau des requêtes de synchronisation programmées vers le serveur de messagerie 9 (étape S27). Les nouveaux messages électroniques reçus par l'utilisateur sur le serveur de messagerie 9 (étape S28) sont transférés au terminal mobile 20 (étape S30). Cette procédure (étapes S26 à S30) est également valable en l'absence de présence du terminal mobile 20 dans le champ de détection lors du démarrage de l'ordinateur 3.

Ainsi, l'automatisation du service de transfert de message conformément à la présente invention évite les redondances de lecture et de traitements des messages électroniques entre le poste fixe et le terminal mobile tout en assurant une gestion automatique du service qui détache l'utilisateur du souci d'activer ou de désactiver le service.

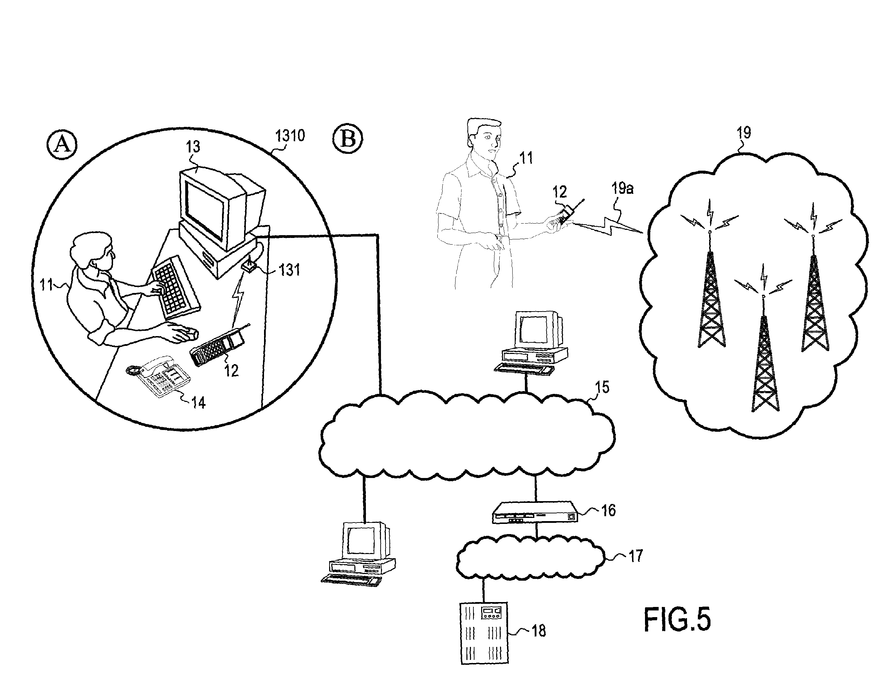

La figure 5 est une vue globale d'un système de l'invention conformément à un troisième mode de réalisation de l'invention appliqué à l'activation/désactivation d'un service de transfert d'appels téléphoniques. Les parties qui interviennent lors de la mise en oeuvre du procédé d'activation/désactivation d'un service de transfert d'appels téléphoniques dans le système de la figure 5 sont un utilisateur 11, équipé d'un terminal mobile 12 comprenant des moyens de communication radio courte distance tels qu'un port Bluetooth™ (non représenté) ou équivalent et un poste de travail fixe comme par exemple un ordinateur 13 de type PC qui comprend également des moyens de communication radio courte distance tel qu'une borne Bluetooth™ 131 ou équivalent. L'ordinateur 13 possède un champ de détection radio courte distance 1310 et une application ou logiciel client de surveillance de l'activité radio courte distance (ici Bluetooth™) qui est en liaison avec la borne Bluetooth™ 131 et qui s'active automatiquement dès que le terminal mobile 12 est détecté par la borne 131.

La détection de la présence du terminal mobile 12 dans le champ de détection radio courte distance 1310 de l'ordinateur 13 se fait de la même manière que pour le mode de réalisation de la figure 1 décrit précédemment.

L'ordinateur 13 est relié à un réseau local 15. Le terminal mobile 12 a accès, via une liaison 19a, à un réseau de téléphonie mobile 19.

Le système de la figure 5 comprend en outre un poste téléphonique fixe 14 de type téléphone de bureau, un central téléphonique 18 qui peut être comme sur la figure 5 de type central téléphonique privé PABX ("Private Automatic Branch eXchange") en liaison avec un réseau téléphonique 17 ou de type central voix sur IP IPBX ("IP-based Private Branch eXchange") (dans ce cas, le central est directement relié au réseau local 15). Le système comprend encore un serveur CTI 16 (Couplage Téléphonique Informatique) offrant des fonctionnalités avancées de paramétrage du central téléphonique privé 18 comme le transfert d'appels téléphoniques par exemple. Le fonctionnement des centraux de type PABX et IPBX avec des services CTI est bien connu en soi et ne sera décrit plus en détail.

L'activation ou la désactivation du service de transfert d'appels téléphoniques est réalisée en fonction de la présence/absence du terminal mobile 12 de l'utilisateur dans le champ de détection 1310. Lorsque l'utilisateur se trouve avec son terminal mobile 12 en dehors du champ de détection 1310 (situation B), l'ordinateur 13 envoie une demande de service de d'activation de transfert au serveur CTI 16 qui génère une séquence de commande d'activation des règles de transfert d'appel sur le central 18. Au contraire, lorsque l'utilisateur se trouve avec son terminal mobile 12 dans le champ de détection 1310 (situation A), l'ordinateur 13 envoie une demande de désactivation du service de transfert au serveur CTI 16 qui génère une séquence de commande de désactivation des règles de transfert d'appels sur le central 18.

Par ailleurs, l'ordinateur 3 est équipé d'un logiciel client CTI pour permettre à l'utilisateur de définir ses règles de transfert d'appels. Dans l'exemple ici considéré, la règle définie par l'utilisateur 11 est de renvoyer les appels entrants sur le téléphone fixe 14 vers le terminal mobile 12 lorsque que ce dernier est en dehors du champ de détection 1310.

Conformément à la présente invention, l'activation et la désactivation du service de transfert d'appels sont gérées automatiquement par l'application de surveillance à la différence de la technique antérieure dans laquelle l'activation et la désactivation d'un tel service sont réalisées par l'utilisateur à partir de son poste téléphonique.

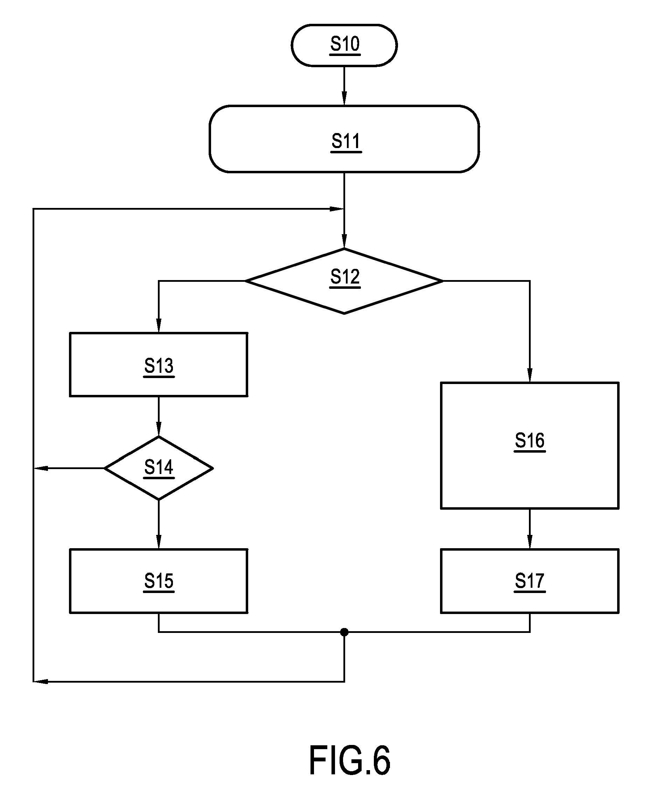

On décrit maintenant en relation avec la figure 6 un procédé d'activation/désactivation automatique du service de renvoi d'appel conformément à un mode de réalisation de l'invention qui est mis en oeuvre dans le système de la figure 5.

Au démarrage de l'ordinateur 3 ("boot") (étape S10), une application ou logiciel de surveillance de l'activité Bluetooth™ pour le service de transfert d'appels téléphoniques est chargée en mémoire (étape S11). Dès qu'elle est chargée, cette application recherche en permanence, via un dialogue avec la borne Bluetooth™ 131, la présence du terminal mobile 12 dans le champ de détection 1310 (étape S12). A cet effet, on définit préalablement un partenariat entre le terminal mobile 12 et l'ordinateur 13 qui permet à l'application de reconnaître et d'authentifier le terminal mobile lorsque celui-ci est à portée de la borne 131 (exemple partenariat défini lors de l'installation de la borne Bluetooth™ 31 décrit en liaison avec la figure 1).

Lorsque la présence d'un terminal mobile est détectée par la borne Bluetooth™ 31 (étape S13), l'application en est informée et vérifie si l'appareil détecté répond au partenariat préalablement défini pour déterminer s'il s'agit bien du terminal mobile 12 (étape S14). Si le terminal détecté n'est pas reconnu et authentifié comme le terminal mobile 12, l'application ne réagit pas et le service de renvoi d'appel reste activé.

En revanche, si le terminal détecté correspond bien au terminal mobile 12, signifiant dans l'exemple de la figure 5 que l'utilisateur est entré dans son bureau où se trouve l'ordinateur 13 (situation A), l'application envoie une demande de désactivation des règles de transfert pour l'utilisateur 11 au serveur CTI 16 qui génère une séquence de commande de désactivation des règles de transfert d'appels sur le central 18 (étape S15). Le serveur CTI lance une séquence de code DTMF afin d'annuler les transferts initialisés sur le central téléphonique qui peut être, comme le central 18, un central de type PABX ou un central IPBX (selon que l'entreprise dispose d'un PABX classique ou qu'elle est en mode téléphonie sur IP (ToIP)). A partir de ce moment, les appels entrants sont reçus sur le poste téléphonique 14.

Lorsque le terminal mobile 12 quitte le champ de détection Bluetooth™ 1310 (ex. perte de connexion lorsque l'utilisateur 1 du terminal mobile 2 quitte son bureau (situation B sur la figure 5)) (étape S16), l'application envoie une demande d'activation des règles de transferts définies pour l'utilisateur 11 au serveur CTI 16 qui génère une séquence de commande d'activation des règles de transfert d'appels sur le central 18 (étape S17). Le serveur CTI lance une séquence de code DTMF afin d'activer les transferts initialisés sur le central téléphonique PABX ou IPBX (selon que l'entreprise dispose d'un PABX classique ou qu'elle est en mode téléphonie sur IP (ToIP)). A partir de ce moment, les appels entrants à destination du poste téléphonique 14 sont transférés vers le terminal mobile 12.

Ainsi, la présente invention offre à l'utilisateur une simplicité d'utilisation du service de transfert d'appels téléphoniques par la mise en oeuvre passive (transparente du point de vue de l'utilisateur) du service. Elle permet en outre une optimisation de la joignabilité de l'utilisateur au sein même d'une entreprise, les règles d'acheminement des appels s'adaptant automatiquement en fonction de ses déplacements, et ce en temps réel.

## Revendications

1. Procédé d'activation et de désactivation automatique d'un service, **caractérisé en ce qu'**il comprend les étapes suivantes:
a) établissement, à partir d'un premier terminal (3), d'un champ de détection radio courte distance (310) pour détecter la présence d'un deuxième terminal (2),
b) désactivation dudit service lorsque le deuxième terminal (2) est dans le champ de détection radio courte distance (310), et
c) activation dudit service lorsque le deuxième terminal (2) est en dehors du champ de détection radio courte distance (310).

2. Procédé selon la revendication 1, **caractérisé en ce que** le service est un service de transfert de messages électroniques destiné à permettre à un utilisateur (1) de recevoir sur le deuxième terminal (2) les messages électroniques envoyés vers un serveur de messagerie (4) et destinés à être transmis au premier terminal (3), les premier et deuxième terminaux comprenant chacun un logiciel de messagerie pour accéder audit serveur de messagerie.

3. Procédé selon la revendication 1 ou 2, **caractérisé en ce que**, dans l'étape a), une application de surveillance de l'activité radio courte distance est exécutée sur le premier terminal (3) dès le démarrage de celui-ci.

4. Procédé selon la revendication 3, **caractérisé en ce que**, dans l'étape b), l'application de surveillance envoie à un ensemble (10) comprenant le serveur de messagerie (4) et un serveur de transfert de message (6), directement ou au travers d'un module d'application associé audit ensemble, une information de présence du deuxième terminal (2) de manière à désactiver le service de transfert de messages électroniques vers ledit deuxième terminal et **en ce que**, dans l'étape c), l'application de surveillance envoie audit ensemble (10), directement ou au travers d'un module d'application associé audit ensemble, une information d'absence du deuxième terminal (2) de manière à activer le service de transfert de messages électroniques vers ledit deuxième terminal.

5. Procédé selon la revendication 1 ou 2, **caractérisé en ce que**, dans l'étape a), une application de surveillance de l'activité radio courte distance est exécutée sur le deuxième terminal (20) dès le démarrage de celui-ci.

6. Procédé selon la revendication 5, **caractérisé en ce que**, dans l'étape b), l'application de surveillance inhibe l'envoi de requêtes de synchronisation depuis le deuxième terminal (20) vers le serveur de messagerie (9) de manière à désactiver le service de transfert de messages électroniques vers ledit deuxième terminal et **en ce que**, dans l'étape c), l'application de surveillance autorise l'envoi de requêtes de synchronisation depuis le deuxième terminal (20) vers le serveur de messagerie (9) de manière à activer le service de transfert de messages électroniques vers ledit deuxième terminal.

7. Procédé selon l'une quelconque des revendications 2 à 6, **caractérisé en ce que**, dans l'étape c), seul les messages électroniques non traités par l'utilisateur (1) sur le premier terminal (3) sont transférés vers le second terminal (2; 20).

8. Procédé selon la revendication 1, **caractérisé en ce que** le service est un service de transfert d'appels téléphoniques destiné à permettre à un utilisateur (1) de recevoir sur le deuxième terminal les communications téléphoniques émises à destination d'un poste téléphonique (14).

9. Procédé selon la revendication 8, **caractérisé en ce que**, dans l'étape b), l'application de surveillance envoie à un serveur (16) une information de présence du deuxième terminal (2) de manière à désactiver le service de transfert d'appels téléphoniques vers ledit deuxième terminal et **en ce que**, dans l'étape c), l'application de surveillance envoie à un serveur (16), une information d'absence du deuxième terminal (2) de manière à activer le service de transfert d'appels téléphoniques vers ledit deuxième terminal.

10. Terminal (20; 3) comprenant des moyens d'établissement de liaison avec un serveur de messagerie (4; 9) ou avec un serveur (16),
**caractérisé en ce qu'**il comprend des moyens (31) de détection radio courte distance pour détecter la présence d'un deuxième terminal (3; 20) dans un champ de détection radio courte distance (310), des moyens pour désactiver un service lorsque le deuxième terminal est dans le champ radio courte distance et des moyens pour activer ledit service lorsque le deuxième terminal est en dehors du champ de détection radio courte distance.

11. Terminal (3) selon la revendication 10, **caractérisé en ce que** le service est un service de transfert de messages électroniques destiné à permettre à un utilisateur (1) de recevoir sur le deuxième terminal (2) les messages électroniques envoyés vers un serveur de messagerie (4) et destinés à être transmis audit terminal (3), et **en ce que** ledit terminal comprend des moyens pour envoyer à un ensemble (10), comprenant le serveur de messagerie (4) et un serveur de transfert de message (6), une information de présence du deuxième terminal (2) de manière à désactiver le service de transfert de messages électroniques vers ledit deuxième terminal et des moyens pour envoyer audit ensemble (10) une information d'absence du deuxième terminal (2) de manière à activer le service de transfert de messages électroniques vers ledit deuxième terminal.

12. Terminal (3) selon la revendication 10, **caractérisé en ce que** le service est un service de transfert d'appels téléphoniques destiné à permettre à un utilisateur (1) de recevoir sur le deuxième terminal (2) les communications téléphoniques émises à destination d'un poste téléphonique (14), et **en ce que** ledit terminal (3) comprend des moyens pour envoyer à un serveur (16) une information de présence du deuxième terminal (2) de manière à désactiver le service de transfert d'appels téléphoniques vers ledit deuxième terminal et des moyens pour envoyer à un serveur (16) une information d'absence du deuxième terminal (2) de manière à activer le service de transfert d'appels téléphoniques vers ledit deuxième terminal.

13. Terminal (20) selon la revendication 10, **caractérisé en ce que** le service est un service de transfert de messages électroniques destiné à permettre à un utilisateur (1) de recevoir sur ledit terminal (20) les messages électroniques envoyés vers un serveur de messagerie (9) et destinés à être transmis au deuxième terminal (3), et **en ce que** ledit terminal comprend des moyens pour inhiber l'envoi de requêtes de synchronisation depuis ledit terminal (20) vers le serveur de messagerie (9) de manière à désactiver le service de transfert de messages électroniques vers ledit terminal et des moyens pour autoriser l'envoi de requêtes de synchronisation depuis ledit terminal (20) vers le serveur de messagerie (9) de manière à activer le service de transfert de messages électroniques vers ledit terminal.

14. Programme d'ordinateur pouvant être mis en oeuvre par un terminal (3) selon la revendication 11, **caractérisé en ce qu'**il comporte des instructions pour envoyer au serveur de messagerie (4) une information de présence du deuxième terminal (2) pour désactiver le service de transfert de messages électroniques vers ledit deuxième terminal lorsque celui-ci est détecté par ledit terminal (3) ou une information d'absence du deuxième terminal (2) pour activer le service de transfert de messages électroniques vers ledit deuxième terminal.

15. Programme d'ordinateur pouvant être mis en oeuvre par un terminal (3) selon la revendication 12, **caractérisé en ce qu'**il comporte des instructions pour envoyer à un serveur (16), une information de présence du deuxième terminal (2) de manière à désactiver le service de transfert d'appels téléphoniques vers ledit deuxième terminal ou une information d'absence du deuxième terminal (2) de manière à activer le service de transfert d'appels téléphoniques vers ledit deuxième terminal.

16. Programme d'ordinateur pouvant être mis en oeuvre par un terminal (20) selon la revendication 13, **caractérisé en ce qu'**il comporte des instructions pour inhiber l'envoi de requêtes de synchronisation depuis ledit terminal (20) vers le serveur de messagerie (9) de manière à désactiver le service de transfert de messages électroniques vers ledit terminal et pour autoriser l'envoi de requêtes de synchronisation depuis ledit terminal (20) vers le serveur de messagerie (9) de manière à activer le service de transfert de messages électroniques vers ledit terminal.

17. Support d'enregistrement sur lequel est stocké le programme selon l'une quelconque des revendications 14 à 16.
